(19) **Europäisches Patentamt**
**European Patent Office**
**Office européen des brevets**

(11) **EP 3 934 088 A1**

(12) **EUROPEAN PATENT APPLICATION**
published in accordance with Art. 153(4) EPC

(43) Date of publication:
**05.01.2022 Bulletin 2022/01**

(51) Int Cl.:
***H02M 7/48*** (2007.01)     ***H02M 1/12*** (2006.01)

(21) Application number: **20791220.5**

(22) Date of filing: **09.04.2020**

(86) International application number:
**PCT/JP2020/015965**

(87) International publication number:
**WO 2020/213511 (22.10.2020 Gazette 2020/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2019 JP 2019080059**

(71) Applicant: DAIKIN INDUSTRIES, LTD.
**Osaka-shi, Osaka 530-8323 (JP)**

(72) Inventors:
• **TANAKA Nami**
**Osaka-shi, Osaka 530-8323 (JP)**
• **SEKIMOTO Morimitsu**
**Osaka-shi, Osaka 530-8323 (JP)**
• **OGAWA Takurou**
**Osaka-shi, Osaka 530-8323 (JP)**
• **HAYASHI Nobuo**
**Osaka-shi, Osaka 530-8323 (JP)**

(74) Representative: Hoffmann Eitle
**Patent- und Rechtsanwälte PartmbB**
**Arabellastraße 30**
**81925 München (DE)**

(54) **AIR CONDITIONING DEVICE**

(57)     In an air-conditioning device, a control unit (40) of a power converter (10) controls a switching operation such that input current ($i_s$) to the power converter (10) includes a non-conduction period. The control unit (40) controls the switching operation such that a phase of a fifth harmonic with respect to a fundamental wave contained in the input current ($i_s$) falls within a range of 90° to 270°, both inclusive, under the maximum condition of the air-conditioning device, and that an amplitude ratio that is a value of (an amplitude of the fifth harmonic) / (an amplitude of the fundamental wave component) under the maximum condition of the air-conditioning device is smaller than the amplitude ratio under the rated condition of the air-conditioning device.

FIG.2

**Description**

TECHNICAL FIELD

The present disclosure relates to an air-conditioning device.

BACKGROUND ART

Some types of power converters have, at a DC link unit, a capacitor with a relatively small capacity, thereby achieving improvement in power factor (see, for example, Patent Document 1).

CITATION LIST

PATENT DOCUMENT

PATENT DOCUMENT 1: Japanese Unexamined Patent Publication No. 2002-51589

SUMMARY OF THE INVENTION

TECHNICAL PROBLEM

In the example of Patent Document 1, when power is supplied to the motor by the power converter, there is a tendency that the effective value of the motor current increases and the efficiency of the motor decreases.

An object of the present disclosure is to achieve suppression of the effective value of the motor current as well as suppression of the harmonic current included in a power source current in a well-balanced manner.

SOLUTION TO THE PROBLEM

A first aspect of the present disclosure is directed to an air-conditioning device, including:

a motor (30);
a power converter (10) configured to supply electric power to the motor (30); and
a control unit (40) configured to control the power converter (10),
the power converter (10) including:

a converter circuit (11) configured to perform rectification of AC voltage of an AC power source (20) that is single-phase;
a DC link unit (12) that has a capacitor (C) and is configured to generate DC voltage ($v_{dc}$) pulsing in accordance with a frequency of the AC voltage with an output of the converter circuit (11) as an input; and
an inverter circuit (13) having a plurality of switching elements (Su, Sv, Sw, Sx, Sy, Sz),
the capacitor (C) having a capacitance value set such that a maximum value of the DC voltage ($v_{dc}$) is at least twice as large as a minimum value of the DC voltage ($v_{dc}$) under a maximum condition of the air-conditioning device,
the inverter circuit (13) being configured to convert the DC voltage ($v_{dc}$) to AC voltage with a predetermined frequency through a switching operation of the switching elements (Su, Sv, Sw, Sx, Sy, Sz) and output the AC voltage to the motor (30),
the control unit (40) controlling
the switching operation such that input current ($i_s$) to the power converter (10) includes a non-conduction period, and
the switching operation such that a phase of a fifth harmonic with respect to a fundamental wave contained in the input current ($i_s$) falls within a range of 90° to 270°, both inclusive, under the maximum condition of the air-conditioning device, and that an amplitude ratio that is a value of (an amplitude of the fifth harmonic) / (an amplitude of a fundamental wave component) under the maximum condition of the air-conditioning device is smaller than the amplitude ratio under a rated condition of the air-conditioning device.

According to the first aspect, depending on electric power, the operation focusing on the efficiency of an air-conditioning device (1) or the operation focusing on suppression of harmonics of the power source current ($i_s$) is performed. According to this embodiment, it is possible to achieve both reduction in the effective value of the motor current and suppression of the harmonic current contained in the power source current in a well-balanced manner.

A second aspect of the present disclosure is an embodiment of the first aspect. In the second aspect,

the control unit (40) controls
the switching operations such that two or more local maximum points are contained under the rated condition and a single local maximum point is contained under the maximum condition in a waveform mixed with a polarity of voltage of the AC power source (20) with respect to a waveform, which is obtained such that a fundamental wave, a third harmonic, and a fifth harmonic are extracted from a waveform of the power source current ($i_s$) in a half cycle of a power source and synthesized.

According to the second aspect, under the rated condition, reduction in the effective value of the motor current is mainly performed, and under the maximum condition, suppression of harmonic current is mainly performed.

A third aspect of the present disclosure is an embodiment of the first aspect. In the third aspect, the control unit (40) controls the switching operation such that the amplitude ratio under the maximum condition is 50% or more of the amplitude ratio under the rated condition.

According to the third aspect, reduction in the effective value of the motor current is performed under the rated condition and the maximum condition.

A fourth aspect of the present disclosure is an embodiment of any one of the first to third aspects. In the fourth aspect,
the control unit (40) controls the switching operation such that the amplitude ratio under the rated condition is 9% or more.

According to the fourth aspect, reduction in the effective value of the motor current is reliably performed under the rated condition.

A fifth aspect of the present disclosure is an embodiment of any one of the first to third aspects. In the fifth aspect, the control unit (40) controls the switching operation such that the amplitude ratio under the maximum condition is 4% or more.

According to the fifth aspect, reduction in the effective value of the motor current is reliably performed under the maximum condition.

A sixth aspect of the present disclosure is an embodiment of any one of the first to fifth aspects. In the sixth aspect, the control unit (40) controls the switching operation such that the amplitude ratio decreases in accordance with a magnitude of input electric power of the power converter (10).

According to the sixth aspect, reduction in the effective value of the motor current is performed at operation points, other than under rated condition and the maximum condition.

BRIEF DESCRIPTION OF THE DRAWINGS

FIG. 1 is a piping system diagram of an air-conditioning device.
FIG. 2 is a block diagram illustrating a configuration of a power converter.
FIG. 3 is a view showing exemplary waveforms of a power source voltage and a direct current (DC) voltage.
FIG. 4 is an illustration showing an exemplary first waveform.
FIG. 5 is an illustration showing an exemplary second waveform.
FIG. 6 is an illustration showing a synthesized waveform of the first and second waveforms.
FIG. 7 is an illustration showing the relationship of an effective value of motor current and a THD (described later).
FIG. 8 is an illustration showing the relationship of the value of (amplitude of n-th harmonic) / (amplitude of a fundamental wave component) and a THD (described later).
FIG. 9 is an illustration showing a value of dq-axis current parameter related to a first table in a waveform.
FIG. 10 is an illustration showing the relationship of a phase of the fifth harmonic and an effective value of motor current.
FIG. 11 is an illustration showing an example of a current absolute value waveform when the first table is used.
FIG. 12 is an illustration showing a value of dq-axis current parameter related to a second table in a waveform.
FIG. 13 is an illustration showing an example of a current absolute value waveform when the second table is used.
FIG. 14 is an illustration showing a dq-axis current parameter (Pq, Pd) when the arithmetic average value of the first and second tables is used.
FIG. 15 is an illustration showing an example of a current absolute value waveform when the arithmetic average value of the first and second tables is used.
FIG. 16 is an illustration showing the relationship of an effective value of motor current and an amplitude ratio under a rated condition.

FIG. 17 is an illustration showing the relationship of an effective value of motor current and the amplitude ratio under a maximum condition.

FIG. 18 is an illustration showing the relationship of a ratio upper limit value and the amplitude ratio.

DESCRIPTION OF EMBODIMENTS

«Embodiment»

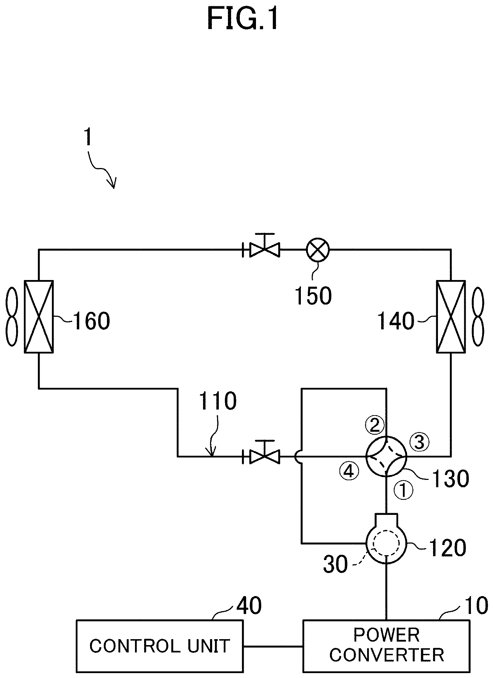

As an embodiment, an example of an air-conditioning device for performing cooling and heating of a room inside will be described. FIG. 1 is a piping system diagram of an air-conditioning device (1). As illustrated in FIG. 1, the air-conditioning device (1) includes a power converter (10), a control unit (40), and a refrigerant circuit (110).

<Refrigerant Circuit>

The refrigerant circuit (110) is a closed circuit filled with a refrigerant. The refrigerant circuit (110) includes a compressor (120), a four-way switching valve (130), an outdoor heat exchanger (140), an expansion valve (150), and an indoor heat exchanger (160).

Any one of various compressors can be used as the compressor (120). Examples of the compressor (120) include a scroll compressor and a rotary compressor. The compressor (120) includes a motor (30). The motor (30) is, for example, an interior permanent magnet motor (IPM motor). The motor (30) receives three-phase AC power from the power converter (10).

The outdoor heat exchanger (140) constitutes a heat exchanger that exchanges heat between outdoor air and the refrigerant. The indoor heat exchanger (160) constitutes a heat exchanger that exchanges heat between indoor air and the refrigerant. The expansion valve (150) is a so-called electronic expansion valve.

The four-way switching valve (130) has first to fourth ports. The four-way switching valve (130) is capable of switching between a first state (the state indicated by solid curves in FIG. 1) and a second state (the state indicated by broken curves in FIG. 1). In the first state, the first port and the third port communicate with each other, and the second port and the fourth port communicate with each other. In the second state, the first port and the fourth port communicate with each other, and the second port and the third port communicate with each other.

In the refrigerant circuit (110), the compressor (120) has discharge and suction ports respectively connected to the first and second ports of the four-way switching valve (130). The outdoor heat exchanger (140), the expansion valve (150), and the indoor heat exchanger (160) in the refrigerant circuit (110) are arranged in this order between the third port and the fourth port of the four-way switching valve (130). The air-conditioning device (1) switches the four-way switching valve (130) when a cooling operation and a heating operation is to be switched.

<Power Converter>

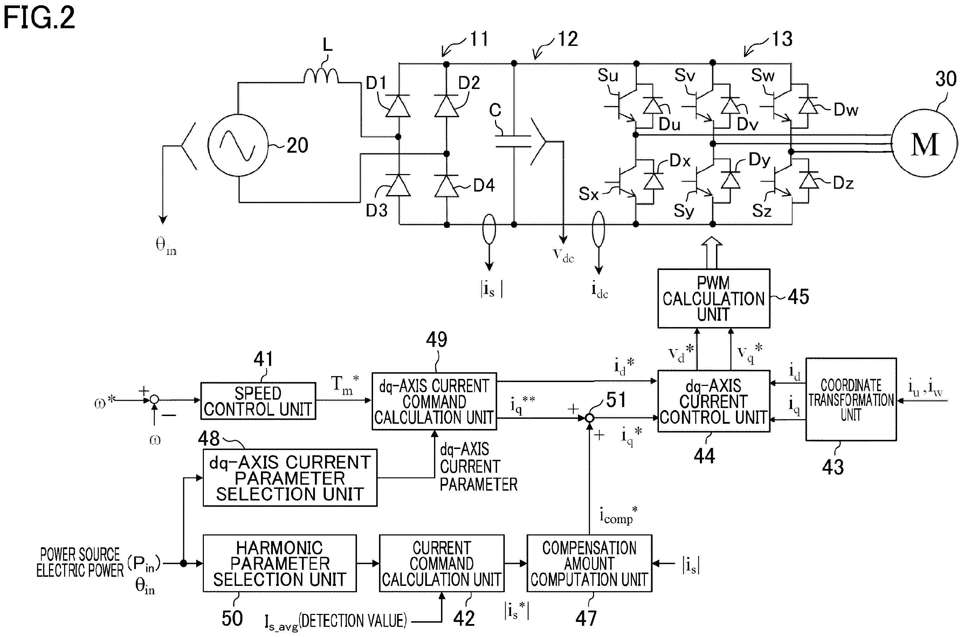

FIG. 2 is a block diagram illustrating a configuration of the power converter (10). The power converter (10) includes a converter circuit (11), a DC link unit (12), and an inverter circuit (13), as illustrated in FIG. 2. The power converter (10) converts a voltage (hereinafter referred to as power source voltage ($v_{in}$)) supplied from a single-phase AC power source (20) to a predetermined AC voltage. The power converter (10) supplies the AC voltage obtained through the above-mentioned conversion to a motor (30).

The converter circuit (11) includes four diodes (D1, D2, D3, D4) that are connected with each other in a bridge configuration. The converter circuit (11) is connected to the AC power source (20) via a reactor (L). The converter circuit (11) performs full-wave rectification of the power source voltage ($v_{in}$).

The DC link unit (12) has a capacitor (C). The capacitor (C) is connected to an output node of the converter circuit (11). The capacitance value of the capacitor (C) is not so large as to enable smoothing of the output from the converter circuit (11). On the other hand, the capacitance value of the capacitor (C) is set to enable reduction in a ripple voltage resulting from a switching operation (which will be described later) of the inverter circuit (13). The ripple voltage is voltage fluctuations associated with switching frequencies.

Specifically, the capacitor (C) is a capacitor with small capacitance having a capacitance value that is about 0.01 times as large as a capacitance value of a smoothing capacitor (e.g., an electrolytic capacitor) for use in a typical power converter used for performing smoothing of the output from the converter circuit. The capacitance value of the capacitor (C) is, for example, about several tens of $\mu$F. In this example, a film capacitor is used as the capacitor (C).

As described above, the output from the converter circuit (11) is hardly smoothed at the DC link unit (12). As a result, the interterminal voltage of the capacitor (C) (hereinafter referred to as DC voltage ($v_{dc}$)) includes residual ripple components in accordance with the frequency of the power source voltage ($v_{in}$). In other words, the DC link unit (12) generates a DC voltage ($v_{dc}$) that pulsates in accordance with the frequency of the AC voltage (power source voltage ($v_{in}$)).

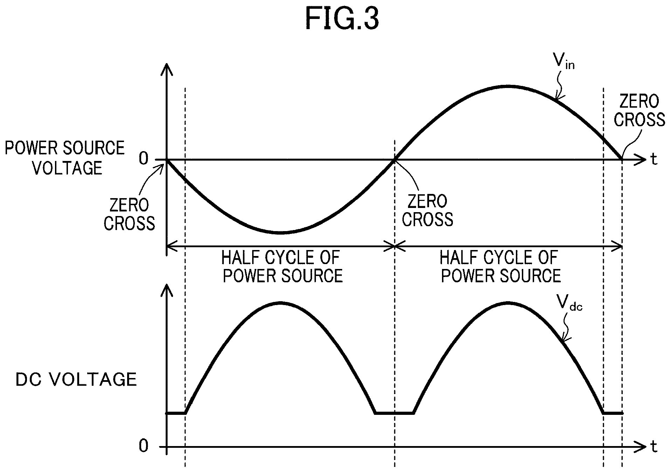

FIG. 3 shows exemplary waveforms of the power source voltage ($v_{in}$) and the DC voltage ($v_{dc}$). In this example, the ripple components have a frequency twice as high as a frequency of the power source voltage ($v_{in}$). The DC voltage ($v_{dc}$) pulsates so that its maximum value is higher than or equal to twice its minimum value.

The inverter circuit (13) includes six switching elements (Su, Sv, Sw, Sx, Sy, Sz) and six freewheeling diodes (Du, Dv, Dw, Dx, Dy, Dz). The switching elements (Su, Sv, Sw, Sx, Sy, Sz) are connected with each other in a bridge configuration. Specifically, the inverter circuit (13) has three switching legs.

Each switching leg includes two switching elements connected to each other in series. Each of the three switching legs includes an upper-arm switching element (Su, Sv, Sw) and a lower-arm switching element (Sx, Sy, Sz), and midpoints between the upper and lower switching elements are connected to coils (not shown) of respective phases (i.e., u-phase, v-phase, and w-phase coils) of the motor (30). Each of the freewheeling diodes (Du, Dv, Dw, Dx, Dy, Dz) is connected in antiparallel to a corresponding one of the switching elements (Su, Sv, Sw, Sx, Sy, Sz).

Input nodes of the inverter circuit (13) are respectively connected to both ends of the capacitor (C) of the DC link unit (12). Through a switching operation (on/off operation) of these switching elements (Su, Sv, Sw, Sx, Sy, Sz), the inverter circuit (13) converts the DC voltage ($v_{dc}$) into a predetermined AC voltage (three-phase). The inverter circuit (13) supplies the AC voltage (three-phase) obtained through the above-mentioned conversion to a motor (30).

<Control Unit>

The control unit (40) controls the switching operation of the inverter circuit (13) so that the number of revolutions (co) of the motor (30) falls at a given command value (hereinafter, a command value ($\omega^*$) of the number of revolutions). In other words, the control unit (40) controls the output voltage of the inverter circuit (13).

The control unit (40) includes a microcomputer and a memory device that stores software programs for operating the microcomputer. Upon execution of the software programs by the microcomputer, the control unit (40) functions as the speed control unit (41), a current command calculation unit (42), a coordinate transformation unit (43), a dq-axis current control unit (44), a PWM calculation unit (45), a compensation amount computation unit (47), a dq-axis current parameter selection unit (48), a dq-axis current command calculation unit (49), a harmonic parameter selection unit (50), and an adder (51) (see FIG. 2).

The speed control unit (41) generates a command value for an average motor torque (Tm) (hereinafter, an average torque command value (Tm*). Specifically, the speed control unit (41) generates the average torque command value (Tm*) by, for example, PID calculation (proportion, integration, differentiation) based on the deviation between the number of revolutions (co) of the motor (30) and the command value ($\omega^*$) of the number of revolutions. The speed control unit (41) outputs the average torque command value (Tm*) to the dq-axis current command calculation unit (49).

The dq-axis current parameter selection unit (48) generates a parameter for generating a d-axis current command value ($i_d^*$) (hereinafter referred to as a d-axis current parameter (Pd)), and a parameter for generating a q-axis current command value ($i_q^*$) (hereinafter referred to as a q-axis current parameter (Pq)). The d-axis current command value ($i_d^*$) is a command value for commanding a d-axis current ($i_d$) of the motor (30). The q-axis current command value ($i_q^*$) is a command value for commanding a q-axis current ($i_q$) of the motor (30).

Hereinafter, the d-axis current parameter (Pd) and the q-axis current parameter (Pq) are generally referred to as a dq-axis current parameter (Pq, Pd). The dq-axis current parameter selection unit (48) outputs the dq-axis current parameter (Pq, Pd) to the dq-axis current command calculation unit (49).

The dq-axis current parameter selection unit (48) includes two tables used for generating the dq-axis current parameter (Pq, Pd). Each of the tables stores a value of the power source phase ($\theta$in) and a value of the dq-axis current parameter (Pq, Pd) at the power source phase ($\theta$in) as a pair. Each of the tables is configured to output, using the power source phase ($\theta$in) as an argument, a corresponding dq-axis current parameter (Pq, Pd) regarding the power source phase ($\theta$in).

The dq-axis current parameter selection unit (48) outputs a value read from one of the tables (Tb1, Tb2) or a value calculated from values of both of the tables (Tb1, Tb2). The contents of the tables (Tb1, Tb2) as well as the generation of the dq-axis current parameter (Pq, Pd) using the tables (Tb1, Tb2) will be described later.

The dq-axis current command calculation unit (49) outputs a value obtained through modulation of the average torque command value (Tm*) using the dq-axis current parameter (Pq, Pd), as a d-axis current command value ($i_d^*$) to the dq-axis current control unit (44). The dq-axis current command calculation unit (49) outputs a value obtained through modulation of the average torque command value (Tm*) using the q-axis current parameter (Pq) (hereinafter referred to as a command value basic data ($i_q^{**}$)) to the adder (51).

For the power converter (10), a period is set in which no power source current ($i_s$) is conducted. In the following, parameters ($\alpha$1, $\alpha$2) are represented by a phase angle with the frequency of the power source voltage ($v_{in}$) as reference.

The harmonic parameter selection unit (50) outputs the lengths $\alpha$1, $\alpha$2 of the non-conduction periods and the harmonic parameter ($i3$) to the current command calculation unit (42). The lengths $\alpha$1, $\alpha$2 of the non-conduction periods and the harmonic parameter ($i3$) are parameters that determine the magnitudes (amplitudes) of harmonics included in current input from the AC power source (20) to the power converter (10) (hereinafter referred to as input current or power

source current ($i_s$)). The harmonic here is the fifth harmonic with respect to the fundamental wave of the power source voltage ($v_{in}$) for the reason described later in detail.

The harmonic parameter selection unit (50) sets the lengths $\alpha 1$, $\alpha 2$ of the non-conduction periods and the magnitude of the harmonic parameter (i3) based on the magnitude of input electric power (hereinafter referred to as power source electric power (Pin)) to the power converter (10) from the AC power source (20). The settings of the lengths $\alpha 1$, $\alpha 2$ of the non-conduction periods and the magnitude of the harmonic parameter (i3) based on the power source electric power (Pin) will be described later.

The current command calculation unit (42) generates a command value of a power source current ($i_s$) (referred to as a power source current command value ($|i_s^*|$)) in the following manner.

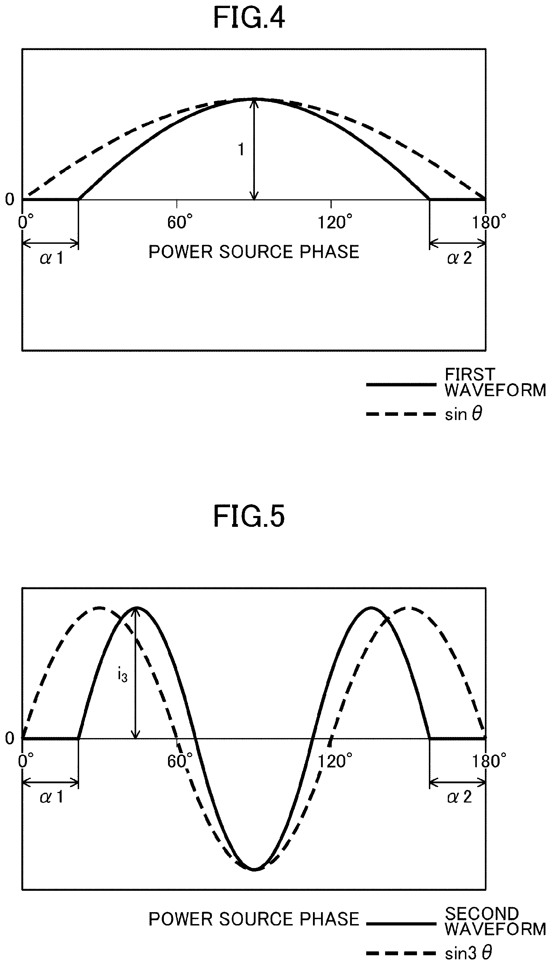

The current command calculation unit (42) generates a waveform indicated by the solid line of FIG. 4 (hereinafter referred to as the first waveform). Specifically, the current command calculation unit (42) generates the first waveform by compressing a sine wave ($\sin\theta$) in a time axis direction. The sine wave has the same frequency ($\theta$) as the power source voltage ($v_{in}$) and the maximum amplitude of 1. The curve indicated by the broken line of FIG. 4 represents a sine wave that has the same frequency ($\theta$) as the power source voltage ($v_{in}$) and the maximum amplitude of 1.

The current command calculation unit (42) performs compression so that non-conduction periods occur in the first waveform directly after the start point and before the end point of the half cycle of the power source (see FIG. 4). The term "half cycle of the power source" is a period that is a half of a cycle of the voltage of the AC power source (20), as illustrated in FIG. 3 (The same holds true for the following description). Here, the length of the non-conduction period at the start point of the half cycle of the power source is $\alpha 1$. The length of the non-conduction period at the end point of the half cycle of the power source is $\alpha 2$. The reference characters $\alpha 1$ and $\alpha 2$ are parameters output from the harmonic parameter selection unit (50). FIG. 4 illustrates the first waveform when $\alpha 1 = \alpha 2 = 20°$. In this case, the first waveform also includes the third harmonic and the fifth harmonic besides the fundamental wave component because the non-conduction period is included.

In the non-conduction period, the DC voltage ($v_{dc}$) can be kept at a predetermined value. Specifically, near the timing of the zero cross in the power source voltage ($v_{in}$), the DC voltage ($v_{dc}$) can be kept at a predetermined value (see FIG. 3). When the DC voltage ($v_{dc}$) can be kept at a predetermined value, it is possible to reduce the d-axis current necessary for flux weakening control for the motor (30) near the timing of the zero cross. In other words, it is possible to reduce the effective value of the motor current in the air-conditioning device (1).

The current command calculation unit (42) generates a waveform indicated by the solid line of FIG. 5 (hereinafter referred to as a second waveform). Specifically, the current command calculation unit (42) generates the second waveform by compressing a sine wave in a time axis direction. The sine wave has a frequency ($3\theta$) three times as large as that of the power source voltage ($v_{in}$) and the maximum amplitude equal to that of the harmonic parameter (i3). The curve indicated by the broken line of FIG. 5 represents a sine wave that has a frequency ($3\theta$) three times as large as that of the power source voltage ($v_{in}$) and the maximum amplitude equal to that of the harmonic parameter (i3).

The current command calculation unit (42) performs compression so that non-conduction periods occur in the second waveform directly after the start point and before the end point of the half cycle of the power source (see FIG. 5). Here, the length of the non-conduction period at the start point of the half cycle of the power source is $\alpha 1$. The length of the non-conduction period at the end point of the half cycle of the power source is $\alpha 2$. FIG. 5 illustrates the second waveform when $\alpha 1 = \alpha 2 = 20°$ and the harmonic parameter (i3) = 0.3. In this case, the second waveform also includes the fifth harmonic besides the third harmonic because the non-conduction period is included.

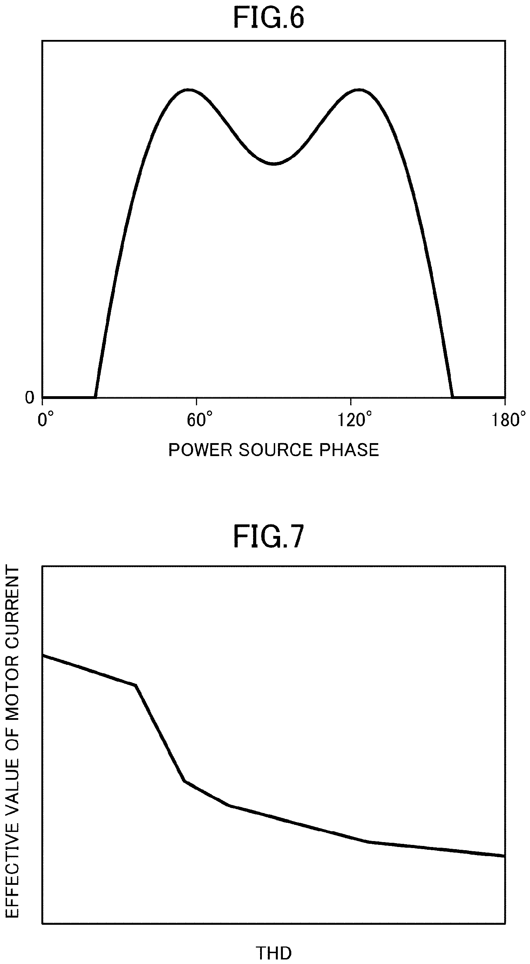

The current command calculation unit (42) generates a synthesized waveform by adding the first waveform and the second waveform. FIG. 6 shows an exemplary synthesized waveform. The current command calculation unit (42) performs, for example, a PI calculation (proportion, integration) based on the deviation between the effective value of the synthesized waveform and the effective value ($i_{s\_avg}$) of the power source current ($i_s$) to obtain a multiplying factor, and generates a waveform obtained through multiplication of the synthesized waveform with the above-mentioned multiplying factor (hereinafter referred to as a third waveform). The first waveform and the second waveform include the fifth harmonic. Hence, the third waveform also includes the fifth harmonic. The current command calculation unit (42) outputs the amplitude value of the third waveform corresponding to the phase (power source phase ($\theta in$)) of the power source voltage ($v_{in}$) to the compensation amount computation unit (47).

The compensation amount computation unit (47) calculates a compensation amount (hereinafter referred to as the compensation amount ($i_{comp}^*$)) with respect to the command value basic data ($i_q^{**}$) so that the deviation between the power source current command value ($|i_s^*|$) and the absolute value of the power source current ($i_s$) becomes small. The compensation amount computation unit (47) obtains, by performing, for example, a PI calculation (proportion, integration), the compensation amount ($i_{comp}^*$) based on the deviation between the power source current command value ($|i_s^*|$) and the absolute value of the power source current ($i_s$). The compensation amount computation unit (47) outputs the compensation amount ($i_{comp}^*$) to the adder (51).

The adder (51) adds the command value basic data ($i_q^{**}$) and the compensation amount ($i_{comp}^*$). The adder (51) outputs the addition result as the q-axis current command value ($i_q^*$) to the dq-axis current control unit (44).

The coordinate transformation unit (43) derives the d-axis current ($i_d$) and the q-axis current ($i_q$) of the motor (30) by performing a so-called dq-transformation. When performing the dq-transformation, the coordinate transformation unit (43) uses a u-phase current (iu), a w-phase current (iw), and an electric angle (motor phase ($\theta$m)) of a rotator (not shown) of the motor (30). The values of the u-phase current (iu) and the w-phase current (iw) can be detected by arranging, for example, an electric current sensor.

The dq-axis current control unit (44) derives the d-axis voltage command value ($v_d{}^*$) and the q-axis voltage command value ($v_q{}^*$) based on the d-axis current command value ($i_d{}^*$), the q-axis current command value ($i_q{}^*$), the d-axis current ($i_d$), and the q-axis current ($i_q$). Specifically, the dq-axis current control unit (44) derives the d-axis voltage command value ($v_d{}^*$) and the q-axis voltage command value ($v_q{}^*$) so that the deviation between the d-axis current command value ($i_d{}^*$) and the d-axis current ($i_d$) and the deviation between the q-axis current command value ($i_q{}^*$) and the q-axis current ($i_q$) become small.

The PWM calculation unit (45) generates a signal (hereinafter, a control signal (G)) for controlling the switching of the ON/OFF operations of the switching elements (Su, Sv, Sw, Sx, Sy, Sz). In this example, the PWM calculation unit (45) sets the duty ratio of the control signal (G) to be supplied to each of the switching elements (Su, Sv, Sw, Sx, Sy, Sz), based on the motor phase ($\theta$m), the DC voltage ($v_{dc}$), the d-axis voltage command value ($v_d{}^*$), the q-axis voltage command value ($v_q{}^*$), a d-axis voltage ($v_d$), and a q-axis voltage ($v_q$).

Upon reception of the control signal (G), each of the switching elements (Su, Sv, Sw, Sx, Sy, Sz) performs the switching operation (ON/OFF operation) at the duty ratio set. The PWM calculation unit (45) updates the control signal (G) periodically.

<Contents of Tables>

When a capacitor with a small capacity is used as the DC link unit (12), the pulsation of the DC voltage ($v_{dc}$) cannot be absorbed. When the pulsation of the DC voltage ($v_{dc}$) cannot be absorbed, the power source current ($i_s$) affects the output of the inverter circuit (13). In other words, when the power source current ($i_s$) contains harmonics, the effective value of the motor current changes. In the power converter (10), the effective value of the motor current is reduced by making the power source current ($i_s$) contain harmonics.

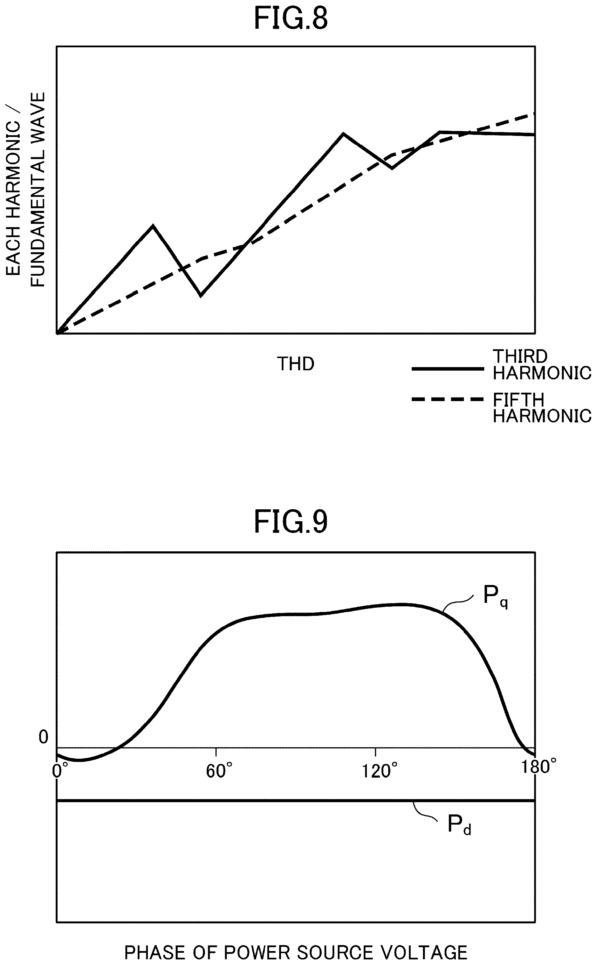

The present inventors have found that the effective value of the motor current can be effectively reduced by making the power source current ($i_s$) contain the fifth harmonic. FIGS. 7 and 8 are each an illustration showing the reason why the fifth harmonic is used as harmonic to be contained in the power source current ($i_s$). The vertical axis of FIG. 7 represents the effective value of the motor current. The horizontal axis of FIG. 7 represents THD defined by the following expression.

[Expression 1]

$$THD = \frac{\sqrt{h_2{}^2 + h_3{}^2 + \cdots + h_n{}^2}}{h_1} \quad \cdots\cdots (1)$$

In Expression (1), h1 is a fundamental wave component contained in the power source current ($i_s$), and hn (n = 2, 3, ...) is an n-th harmonic contained in the power source current ($i_s$). As shown in FIG. 7, the effective value of the motor current decreases as the THD increases.

The horizontal axis of FIG. 8 represents the THD. The vertical axis of FIG. 8 represents a value of (amplitude of n-th harmonic contained in the power source current ($i_s$)) / (amplitude of a fundamental wave component contained in the power source current ($i_s$)). As illustrated in FIG. 8, the THD and the value of (amplitude of n-th harmonic contained in the power source current ($i_s$)) / (amplitude of a fundamental wave component contained in the power source current ($i_s$)) are plotted regarding the case of n=3 and n=5. As illustrated in FIG. 8, the amplitude of the fifth harmonic (the curve of n=5) contained in the power source current ($i_s$) monotonously increases as THD increases. In other words, as the amplitude of the fifth harmonic contained in the power source current ($i_s$) increases, the effective value of the motor current decreases.

As described above, a pair of the power source phase ($\theta$in) and the q-axis current parameter (Pq) is stored in one of the two tables (hereinafter referred to as the first table (Tb1)) included in the dq-axis current parameter selection unit (48) to obtain the power source current ($i_s$) containing the fifth harmonic. FIG. 9 shows a value of a dq-axis current parameter (Pq, Pd) related to the first table (Tb1) in a waveform. The horizontal axis of FIG. 9 represents the power source phase ($\theta$in). The vertical axis of FIG. 9 represents the value of the dq-axis current parameter (Pq, Pd). As shown in FIG 9, the waveform of the q-axis current parameter (Pq) generated by the first table (Tb1) is a waveform (roughly, a trapezoidal waveform) with the peak values of the sine wave being less outstanding.

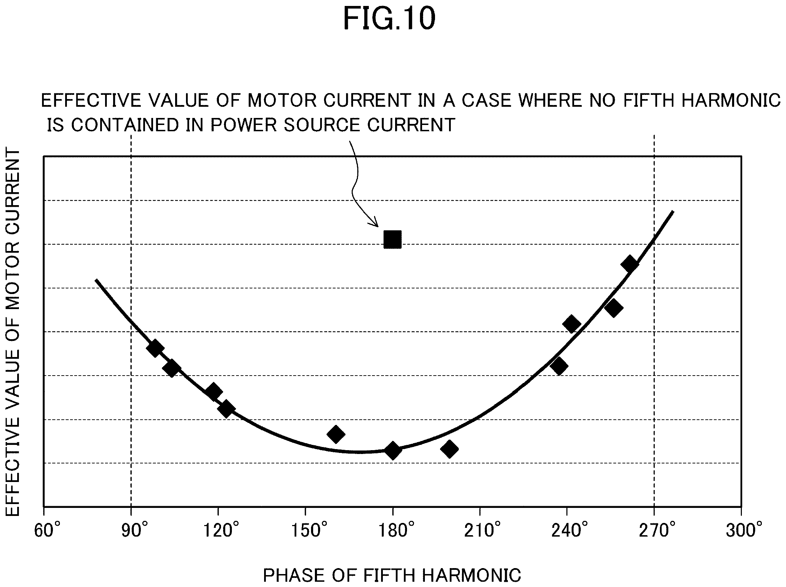

To reduce the effective value of the motor current, the setting of the phase of the fifth harmonic contained in the power source current ($i_s$) is also important. When the phase of the fundamental wave contained in the power source current ($i_s$) is $\theta 1$ and the phase of the fifth harmonic is $\theta 5$, the phase of the fifth harmonic based on the phase of the fundamental wave contained in the power source current ($i_s$) is $\theta 5-5\theta 1$. Fig. 10 shows the relationship of a phase $\theta 5-5\theta 1$ of the fifth harmonic based on the phase of the fundamental wave contained in the power source current ($i_s$) and the effective value of motor current. As illustrated in FIG. 10, when the phase falls within a range of 90° to 270°, both inclusive, the effective value of the motor current can be reduced compared with the case in which no fifth harmonic is contained in the power source current ($i_s$). The first table (Tb1) of this embodiment is configured such that the phase of the fifth harmonic based on the phase of the fundamental wave contained in the power source current ($i_s$) falls within a range of 90° to 270°, both inclusive.

According to this embodiment, the q-axis current parameter (Pq) of the first table (Tb1) is generated to obtain the power source current ($i_s$) containing the fifth harmonic beforehand. The d-axis current parameter (Pd) of the first table (Tb1) is a constant value irrespective of the value of the power source phase ($\theta$in) (see FIG. 9). The first table (Tb1) is written in the memory device of the control unit (40) at the time of, for example, manufacture of the air-conditioning device (1).

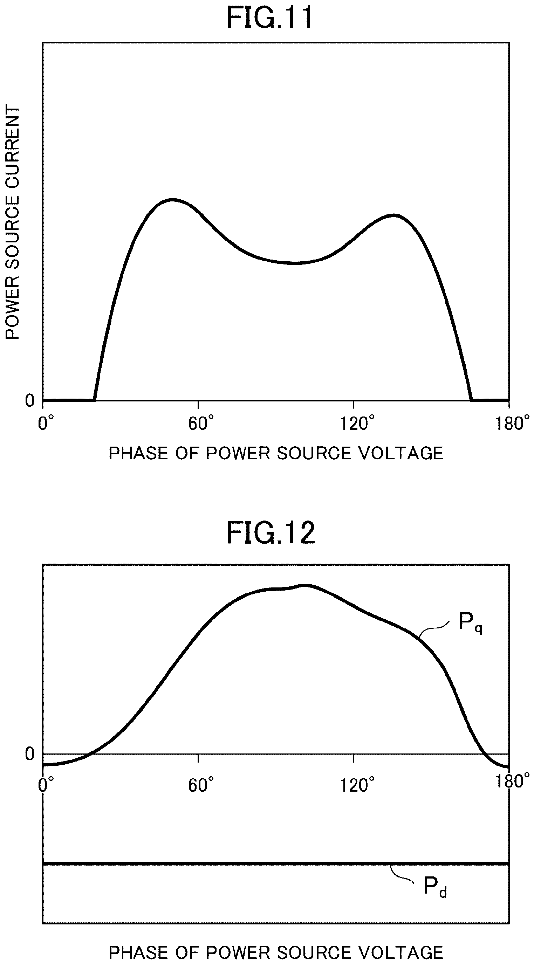

As described above, the first table (Tb1) is a table focusing on reduction in the effective value of the motor current. In other words, the first table (Tb1) is a table focusing on the efficiency of the air-conditioning device (1). In the air-conditioning device (1), when the first table (Tb1) is used for control, two or more local maximum points are contained in a waveform (hereinafter referred to as the current absolute value waveform for the sake of convenience of explanation) mixed with the polarity of the voltage of the AC power source (20) with respect to a waveform, which is obtained such that a fundamental wave, a third harmonic with respect to the fundamental wave, and a fifth harmonic are extracted from a waveform of the power source current ($i_s$) in a half cycle of a power source and synthesized (see FIG. 11). In the air-conditioning device (1), use of the first table (Tb1) for control leads to reduction in the effective value of the motor current.

FIG. 12 shows the dq-axis current parameter (Pq, Pd) generated by the other table (hereinafter referred to as the second table (Tb2)) in a waveform. Also in FIG. 12, the horizontal axis is the power source phase ($\theta$in). The vertical axis of FIG. 12 represents the value of the dq-axis current parameter (Pq, Pd). The second table (Tb2) is also written in the memory device of the control unit (40) at the time of, for example, manufacture of the air-conditioning device (1).

The d-axis current parameter (Pd) of the second table (Tb2) is a constant value irrespective of the value of the power source phase ($\theta$in). The q-axis current parameter (Pq) of the second table (Tb2) is also generated to obtain the power source current ($i_s$) containing the fifth harmonic beforehand. The second table (Tb2) is also configured such that the phase of the fifth harmonic $\theta 5-5\theta 1$ based on the phase of the fundamental wave contained in the power source current ($i_s$) falls within a range of 90° to 270°, both inclusive.

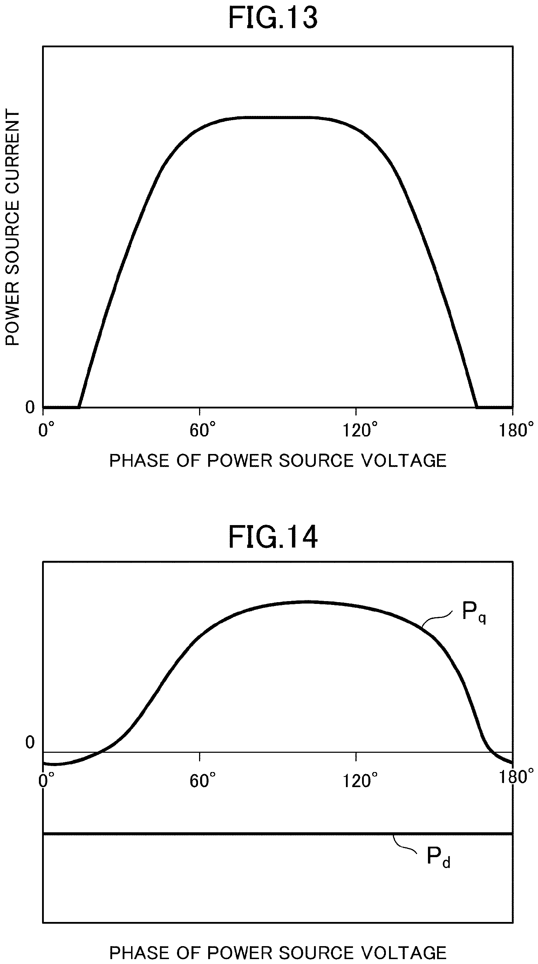

The amplitude ratio that is the value of (amplitude of the above-mentioned fifth harmonic) / (amplitude of the above-mentioned fundamental wave component) when the power source electric power (Pin) is P2 (described later) is smaller than the amplitude ratio that is the value of (amplitude of the above-mentioned fifth harmonic) / (amplitude of the above-mentioned fundamental wave component) when the power source electric power (Pin) is PI (P1<P2, described later in details). The waveform of the power source current ($i_s$) when the power source electric power (Pin) is P2 is closer to a sine wave than the waveform of the power source current ($i_s$) when the power source electric power (Pin) is P1. In the air-conditioning device (1), when the second table (Tb2) is used, one local maximum point is contained in the current absolute value waveform (see FIG. 13).

In the air-conditioning device (1), it is possible to reduce harmonics of the power source current ($i_s$) when only the second table (Tb2) is used to generate the d-axis current command value ($i_d^*$) and/or the q-axis current command value ($i_q^*$), as compared with the case in which only the first table (Tb1) is used to generate the q-axis current command value ($i_q^*$) and/or the q-axis current command value ($i_d^*$). The second table (Tb2) is a table focusing on suppression of harmonics contained in the power source current ($i_s$).

<Generation of the dq-axis Current Parameter>

The dq-axis current parameter selection unit (48) generates, depending on the power source electric power (Pin), the dq-axis current parameter (Pq, Pd). Specifically, the dq-axis current parameter selection unit (48) reads the value from the first table (Tb1) in a case in which the power source electric power (Pin) is smaller than the PI (described later) to output the value as the dq-axis current parameter (Pq, Pd) to the dq-axis current command calculation unit (49). The dq-axis current parameter selection unit (48) reads the value from the second table (Tb2) in a case in which the power source electric power (Pin) is larger than P2 (wherein P2>P1, described later in details) to output the value as the dq-axis current parameter (Pq, Pd) to the dq-axis current command calculation unit (49).

When the power source electric power (Pin) is PI or more and P2 or less, the dq-axis current parameter selection unit (48) obtains the weighted average of the respective values read from the two tables (Tb1, Tb2) to generate the dq-axis current parameter (Pq, Pd). The dq-axis current parameter selection unit (48) outputs weighted average values thus computed as the dq-axis current parameter (Pq, Pd) to the dq-axis current command calculation unit (49).

The dq-axis current parameter selection unit (48) computes the weight at the time of obtaining the weighted average based on a ratio (w=a/b) of the difference (denoted by a) between the current power source electric power (Pin) and the electric power (Pl) to the difference (denoted by b) between the electric power (P2) and the electric power (Pl). The weight with respect to the value of the first table (Tb1) is denoted by (1-w). The weight with respect to the value of the second table (Tb2) is denoted by w.

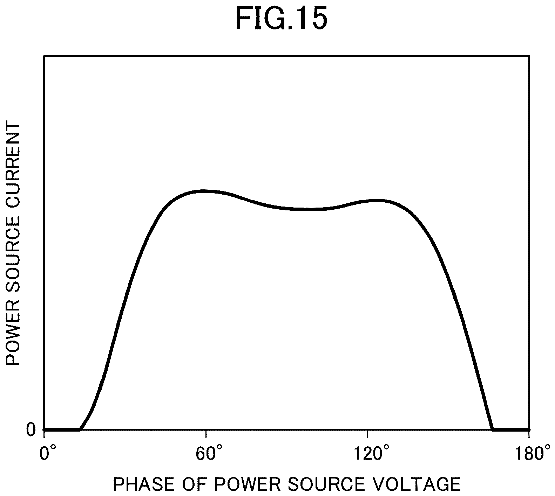

The weight with respect to the first table (Tb1) increases as the current power source electric power (Pin) is closer to the electric power (Pl). When the current power source electric power (Pin) is the average value of the electric power (Pl) and the electric power (P2), the arithmetic average value of the respective values read from the two tables (Tb1, Tb2) as the dq-axis current parameter (Pq, Pd) are the dq-axis current parameter (Pq, Pd). FIG. 14 shows an exemplary dq-axis current parameter (Pq, Pd) when the arithmetic average value is used. FIG. 15 shows an exemplary current absolute value waveform when the arithmetic average value is used.

The electric power (Pl) of this embodiment is the power source electric power (Pin) under the condition under which the operating state of the air-conditioning device (1) is the rated operation (hereinafter referred to as the rated condition). The ISO standards define the "rated condition" as the condition of the performance test of cooling or heating. Specifically, regarding the rated condition of the cooling operation, the standards ISO 5151 "Non-ducted air conditioners and heat pumps-Testing and rating for performance" define the standard rated condition (T1 condition) of the cooling performance test. Regarding the rated condition of the heating operation, the standards ISO 5151 "Non-ducted air conditioners and heat pumps-Testing and rating for performance" define the standard rated condition of the heating performance test.

In the air-conditioning device (1) with the function of performing both of the cooling and heating, the standard rated condition defined for the above-mentioned cooling performance test or the standard rated condition defined for the above-mentioned heating performance test is defined as the "rated condition" of the air-conditioning device (1). The standard rated condition defined for the cooling performance test may be used as the "rated condition", and the standard rated condition defined for the heating performance test may be used as the "rated condition". This is because the power source electric power (Pin) under the test condition is substantially the same irrespective of which test condition the "rated condition" belongs to. On the other hand, when the air-conditioning device (1) is configured as a device solely dedicated to cooling, the standard rated condition of the cooling performance test is defined as the "rated condition" of the air-conditioning device (1).

The electric power (P2) of this embodiment is the power source electric power (Pin) under the maximum condition of the performance of the air-conditioning device (1). The cooling overload condition and the heating low-temperature condition defined according to the ISO standards are defined as the "maximum condition". Regarding the cooling overload condition, the standards ISO 5151 "Non-ducted air conditioners and heat pumps-Testing and rating for performance" define T1 condition of the cooling overload test. Regarding the heating low-temperature condition, the standards ISO 5151 "Non-ducted air conditioners and heat pumps-Testing and rating for performance" define H2 condition of the heating performance test.

In the air-conditioning device (1) with the function of performing both of the cooling and heating, the condition defined for the low-temperature condition of the above-mentioned heating performance test is defined as the "maximum condition" of the air-conditioning device (1). For example, when the air-conditioning device (1) is configured as a device solely dedicated to cooling, the condition of the cooling overload test is defined as the "maximum condition". The power source electric power (Pin) under the test condition is substantially the same irrespective of which test condition the "maximum condition" to be used belongs to. In other words, it does not affect the control of the control unit (40) at all, whichever test condition the "maximum condition" to be used may belong to.

<Generation of Harmonic Parameter>

Here, the value of the (amplitude of the fifth harmonic contained in the power source current ($i_s$)) / (amplitude of the fundamental wave component contained in the power source current ($i_s$)) is defined as an amplitude ratio. The harmonic parameter selection unit (50) adjusts the amplitude ratio depending on the magnitude of the power source electric power (Pin). Hereinafter, the expression "%" is used as the unit of the "amplitude ratio". For example, the amplitude ratio=0.09 is denoted by 9%.

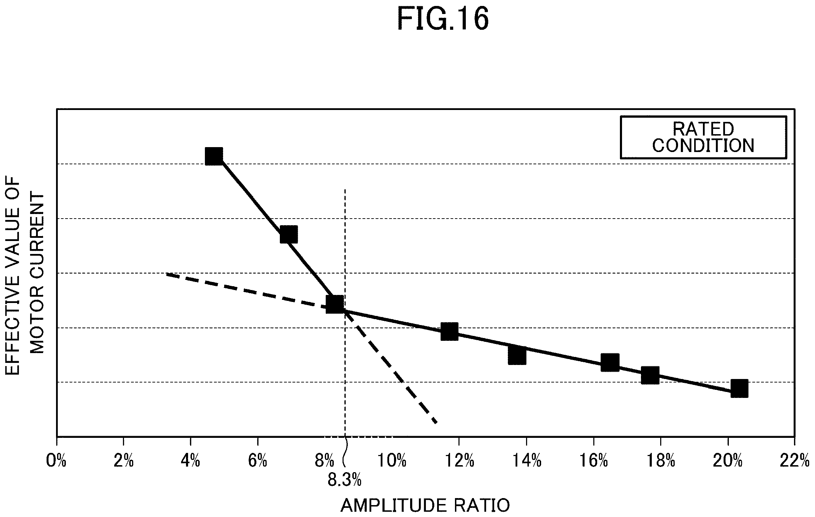

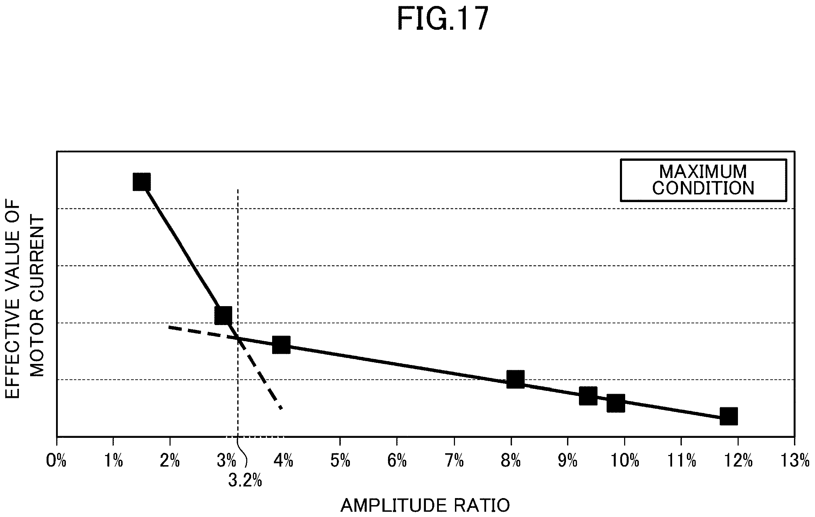

FIG. 16 is an illustration showing the relationship of the effective value of the motor current and the amplitude ratio under the rated condition. FIG. 17 is an illustration showing the relationship of the effective value of the motor current and the amplitude ratio under the maximum condition. In FIGS. 16 and 17, the horizontal axis represents the amplitude ratio. In FIGS. 16 and 17, the vertical axis represents the effective value of the motor current.

As described above, when the fifth harmonic is superimposed on the power source current ($i_s$), the effective

value of the motor current decreases. In each of the graphs shown in FIGS. 16 and 17, the slope of the curve changes greatly at a certain amplitude ratio as a boundary. When the amplitude ratio exceeds the above-mentioned boundary, the effective value of the motor current does not decrease so much even if the amplitude ratio increases.

The point at which the slope changes is substantially the same irrespective of whether the rated condition defined for the cooling performance test (hereinafter referred to as the cooling rated condition) or the rated condition defined for the heating performance test (hereinafter referred to as the heating rated condition) is used as the "rated condition" of the graph of FIG. 16. Under these rated conditions, the point at which the slope changes is the amplitude ratio = 8.3% (rounded up to 9%). In the air-conditioning device (1), the effective value of the motor current reliably decreases when the fifth harmonic is superimposed on the power source current ($i_s$) with the amplitude ratio of 8.3% or more under the rated condition (either the cooling rated condition or the heating rated condition).

The point at which the slope changes is substantially the same irrespective of whether the condition defined for the cooling overload test (hereinafter referred to as the cooling maximum condition) is used as the "maximum condition" of the graph of FIG. 17 or the condition defined for the low-temperature condition of the heating performance test is used as the condition of the air-conditioning device (1) (hereinafter referred to as the heating maximum condition). Under these maximum conditions, the point at which the slope changes is the amplitude ratio = 3.2% (rounded up to 4%). In the air-conditioning device (1), the effective value of the motor current reliably decreases when the fifth harmonic is superimposed on the power source current ($i_s$) with the amplitude ratio of 3.2% or more under the maximum condition (either the cooling maximum condition or the heating maximum condition).

As described above, in the control unit (40), the amplitude ratio is set to be 9% or more under the rated condition, which can be either the cooling rated condition or the heating rated condition (the same holds true for the following), and the amplitude ratio is set to be 4% or more under the maximum condition, which can be either the cooling maximum condition or the heating maximum condition (the same holds true for the following). It is possible to adjust the magnitude of the amplitude ratio depending on the lengths $\alpha 1$, $\alpha 2$ of the non-conduction periods and the magnitude of the harmonic parameter (i3). It is possible to predetermine the lengths $\alpha 1$, $\alpha 2$ of the non-conduction periods and the magnitude of the harmonic parameter (i3) that are to be output by the harmonic parameter selection unit (50), in accordance with experiments or simulation, for example.

In the power converter (10), the amplitude ratio under the maximum condition in any half cycle of the power source is controlled to be smaller than the amplitude ratio under the rated condition. In other words, the control unit (40) controls the switching operation to reduce the amplitude ratio in accordance with the magnitude of the power source electric power (Pin).

The air-conditioning device (1) is based on the premise that the set harmonic standards are satisfied. Examples of the harmonic standards include harmonic standards (hereinafter referred to as the IEC standards) of the International Electrotechnical Commission (abbreviated as IEC).

In this embodiment, the ratio of the magnitude of the harmonic contained in the power source current ($i_s$) is called the ratio upper limit value. For example, when the ratio upper limit value is made different between under the rated condition and under the maximum condition, the effect of reducing the effective value of the motor current lessens either under the rated condition or under the maximum condition. On the other hand, the ratio upper limit value under the rated condition and the ratio upper limit value under the maximum condition are made equal and the amplitude ratio closer to the ratio upper limit value is used so as to increase the effect of reduction in the effective value of the motor current while the harmonic standards under the rated condition and the maximum condition are satisfied.

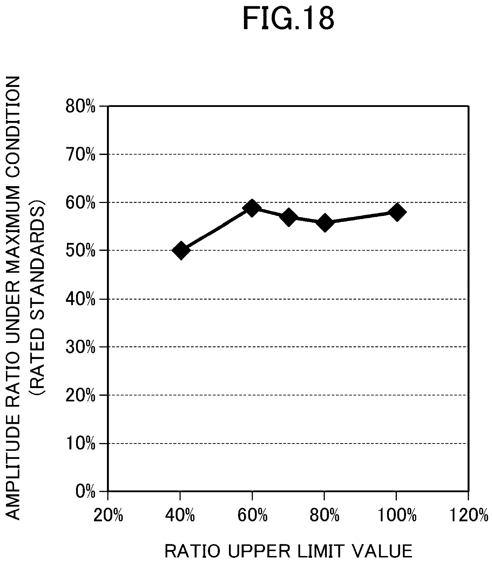

FIG. 18 shows the relationship between a ratio upper limit value and the amplitude ratio. The horizontal axis of FIG. 18 represents the ratio upper limit value. The vertical axis of FIG. 18 represents a value showing the amplitude ratio under the maximum condition in relation to the amplitude ratio under the rated condition. As illustrated in FIG. 18, the amplitude ratio under the maximum condition is 50% or more of the amplitude ratio under the rated condition when the ratio upper limit value falls within a range of from 40% to 100%. To sufficiently reduce the effective value of the motor current under the maximum condition and the rated condition with the set ratio upper limit value, it is necessary to set the amplitude ratio under the maximum condition to be 50% or more of the amplitude ratio under the rated condition. The same result is obtained irrespective of whether the cooling rated condition or the heating rated condition is used as the "rated condition". Likewise, the cooling maximum condition or the heating maximum condition may be used as the "maximum condition".

As described above, in this embodiment, the control unit (40) controls the switching operation such that the amplitude ratio of under the maximum condition is 50% or more of the amplitude ratio under the rated condition. It is possible to adjust the magnitude of the amplitude ratio depending on the lengths $\alpha 1$, $\alpha 2$ of the non-conduction periods and the magnitude of the harmonic parameter (i3). It is possible to predetermine the lengths $\alpha 1$, $\alpha 2$ of the non-conduction periods and the magnitude of the harmonic parameter (i3) that are to be output by the harmonic parameter selection unit (50), in accordance with experiments or simulation, for example. In other words, it is possible to reduce the effective value of the motor current in the air-conditioning device (1) while the harmonic standards are satisfied.

As thus described above, in this embodiment, the air-conditioning device (1) includes: a motor (30); a power converter (10) configured to supply electric power to the motor (30); and a control unit (40) configured to control the power converter (10),
the power converter (10) including:

a converter circuit (11) configured to perform rectification of AC voltage of an AC power source (20) that is single-phase;
a DC link unit (12) that has a capacitor (C) and is configured to generate DC voltage ($v_{dc}$) pulsing in accordance with a frequency of the AC voltage with an output of the converter circuit (11) as an input; and
an inverter circuit (13) having a plurality of switching elements (Su, Sv, Sw, Sx, Sy, Sz),
the capacitor (C) having a capacitance value set such that a maximum value of the DC voltage ($v_{dc}$) is at least twice as large as a minimum value of the DC voltage ($v_{dc}$) under a maximum condition of the air-conditioning device (1),
the inverter circuit (13) being configured to convert the DC voltage ($v_{dc}$) to AC voltage with a predetermined frequency through a switching operation of the switching elements (Su, Sv, Sw, Sx, Sy, Sz) and output the AC voltage to the motor (30),
the control unit (40) controlling
the switching operation such that input current ($i_s$) to the power converter (10) includes a non-conduction period, and
the switching operation such that a phase of a fifth harmonic with respect to a fundamental wave contained in the input current ($i_s$) falls within a range of 90° to 270°, both inclusive, under the maximum condition of the air-conditioning device (1), and that an amplitude ratio that is a value of (an amplitude of the fifth harmonic) / (an amplitude of a fundamental wave component) under the maximum condition of the air-conditioning device (1) is smaller than the amplitude ratio under a rated condition of the air-conditioning device (1).

<Advantages of This Embodiment>

As described above, in this embodiment, the amplitude ratio is controlled depending on the power source electric power (Pin). With this configuration, according to this embodiment, it is possible to achieve both reduction in the effective value of the motor current and suppression of the harmonic current contained in the power source current in a well-balanced manner.

«Other Embodiments»

The dq-axis current parameter selection unit (48) may use a function implemented in a program instead of the tables. The values of the d-axis current parameters (Pd) of the first table (Tb1) and the second table (Tb2) may vary depending on the power source phase ($\theta$in).
It is possible to store, in the current command calculation unit (42), information that constitutes a basis for generation of the third waveform in a form of the function implemented in the program or a table obtained beforehand.
While the embodiments and variations thereof have been described above, it will be understood that various changes in form and details may be made without departing from the spirit and scope of the claims. The foregoing embodiments and variations thereof may be combined and replaced with each other without deteriorating the intended functions of the present disclosure.

INDUSTRIAL APPLICABILITY

As can be seen from the foregoing description, the present disclosure is useful for an air-conditioning device.

DESCRIPTION OF REFERENCE CHARACTERS

1       Air-conditioning Device
10      Power Converter
11      Converter Circuit
12      DC Link Unit
13      Inverter Circuit
20      AC Power Source
30      Motor
40      Control Unit

**Claims**

1. An air-conditioning device, comprising:

   a motor (30);
   a power converter (10) configured to supply electric power to the motor (30); and
   a control unit (40) configured to control the power converter (10),
   the power converter (10) including:

   a converter circuit (11) configured to perform rectification of AC voltage of an AC power source (20) that is single-phase;
   a DC link unit (12) that has a capacitor (C) and is configured to generate DC voltage ($v_{dc}$) pulsing in accordance with a frequency of the AC voltage with an output of the converter circuit (11) as an input; and
   an inverter circuit (13) having a plurality of switching elements (Su, Sv, Sw, Sx, Sy, Sz),
   the capacitor (C) having a capacitance value set such that a maximum value of the DC voltage ($v_{dc}$) is at least twice as large as a minimum value of the DC voltage ($v_{dc}$) under a maximum condition of the air-conditioning device,
   the inverter circuit (13) being configured to convert the DC voltage ($v_{dc}$) to AC voltage with a predetermined frequency through a switching operation of the switching elements (Su, Sv, Sw, Sx, Sy, Sz) and output the AC voltage to the motor (30),
   the control unit (40) controlling
   the switching operation such that input current ($i_s$) to the power converter (10) includes a non-conduction period,
   and
   the switching operation such that a phase of a fifth harmonic with respect to a fundamental wave contained in the input current ($i_s$) falls within a range of 90° to 270°, both inclusive, under the maximum condition of the air-conditioning device, and that an amplitude ratio that is a value of (an amplitude of the fifth harmonic) / (an amplitude of a fundamental wave component) under the maximum condition of the air-conditioning device is smaller than the amplitude ratio under a rated condition of the air-conditioning device.

2. The air-conditioning device of claim 1, wherein

   the control unit (40) controls
   the switching operations such that two or more local maximum points are contained under the rated condition and a single local maximum point is contained under the maximum condition in a waveform mixed with a polarity of voltage of the AC power source (20) with respect to a waveform, which is obtained such that a fundamental wave, a third harmonic, and a fifth harmonic are extracted from a waveform of the power source current ($i_s$) in a half cycle of a power source and synthesized.

3. The air-conditioning device of claim 1, wherein
   the control unit (40) controls the switching operation such that the amplitude ratio under the maximum condition is 50% or more of the amplitude ratio under the rated condition.

4. The air-conditioning device of any one of claims 1 to 3, wherein
   the control unit (40) controls the switching operation such that the amplitude ratio under the rated condition is 9% or more.

5. The air-conditioning device of any one of claims 1 to 3, wherein
   the control unit (40) controls the switching operation such that the amplitude ratio under the maximum condition is 4% or more.

6. The air-conditioning device of any one of claims 1 to 5, wherein
   the control unit (40) controls the switching operation such that the amplitude ratio decreases in accordance with a magnitude of input electric power of the power converter (10).

# FIG.1

# FIG.2

EP 3 934 088 A1

# FIG.3

# FIG.4

FIRST WAVEFORM — $\sin\theta$

POWER SOURCE PHASE

# FIG.5

POWER SOURCE PHASE — SECOND WAVEFORM — $\sin 3\theta$

# FIG.6

POWER SOURCE PHASE

# FIG.7

EFFECTIVE VALUE OF MOTOR CURRENT

THD

# FIG.8

EACH HARMONIC / FUNDAMENTAL WAVE

THD

—————— THIRD HARMONIC

– – – – – FIFTH HARMONIC

# FIG.9

$P_q$

0

0°     60°     120°     180°

$P_d$

PHASE OF POWER SOURCE VOLTAGE

# FIG.10

EFFECTIVE VALUE OF MOTOR CURRENT IN A CASE WHERE NO FIFTH HARMONIC
IS CONTAINED IN POWER SOURCE CURRENT

EFFECTIVE VALUE OF MOTOR CURRENT

PHASE OF FIFTH HARMONIC

60°  90°  120°  150°  180°  210°  240°  270°  300°

EP 3 934 088 A1

# FIG.11

PHASE OF POWER SOURCE VOLTAGE

POWER SOURCE CURRENT (vertical axis)

0°    60°    120°    180°

# FIG.12

$P_q$

$P_d$

PHASE OF POWER SOURCE VOLTAGE

0°    60°    120°    180°

## FIG.13

POWER SOURCE CURRENT (y-axis)

PHASE OF POWER SOURCE VOLTAGE (x-axis: 0°, 60°, 120°, 180°)

## FIG.14

PHASE OF POWER SOURCE VOLTAGE

# FIG.15

FIG.16

FIG.17

# FIG.18

## INTERNATIONAL SEARCH REPORT

International application No.

PCT/JP2020/015965

A. CLASSIFICATION OF SUBJECT MATTER
H02M 7/48(2007.01)i; H02M 1/12(2006.01)i
FI: H02M7/48 E; H02M1/12

According to International Patent Classification (IPC) or to both national classification and IPC

B. FIELDS SEARCHED

Minimum documentation searched (classification system followed by classification symbols)
H02M1/00-7/98; H02P21/00-27/18; F24F11/00-11/89

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2019/065859 A1 (DAIKIN INDUSTRIES, LTD.) 04.04.2019 (2019-04-04) entire text, all drawings | 1-6 |
| A | JP 2016-140171 A (TOSHIBA CARRIER CORPORATION) 04.08.2016 (2016-08-04) entire text, all drawings | 1-6 |
| A | JP 2017-55489 A (JOHNSON CONTROLS HITACHI AIR CONDITIONING TECHNOLOGY (HONGKONG) LTD.) 16.03.2017 (2017-03-16) entire text, all drawings | 1-6 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 June 2020 (30.06.2020) | 07 July 2020 (07.07.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/015965

| Patent Documents referred in the Report | Publication Date | Patent Family | Publication Date |
|---|---|---|---|
| WO 2019/065859 A1 | 04 Apr. 2019 | EP 3664275 A1 entire text, all drawings JP 2019-68731 A CN 111149287 A | |
| JP 2016-140171 A | 04 Aug. 2016 | (Family: none) | |
| JP 2017-55489 A | 16 Mar. 2017 | US 2017/0070157 A1 entire text, all drawings CN 106505883 A KR 10-2017-0029366 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002051589 A